# EUROPEAN PATENT APPLICATION

(11) **EP 4 135 482 A1**
(43) Date of publication of application: **15.02.2023**
(21) Application number: 21191169.8
(22) Date of filing: 13.08.2021
(51) Int. Cl.: H05B 47/18, H02H 9/00

(54) **RIPPLE-REDUCING CURRENT LIMITER FOR A POWER SUPPLY OF A LIGHTING CONTROL BUS**

(71) Applicant: Tridonic GmbH & Co. KG, 6851 Dornbirn (AT)
(72) Inventor: Schertler, Markus, 6850 Dornbirn (AT); Diez, Nikolaus, 6850 Dornbirn (AT)
(74) Representative: Rupp, Christian

(57) **Abstract**

Disclosed is a current limiter (1) for a power supply (2) of a lighting control bus (6). The current limiter (1) comprises a resistor (11) and a switch (12) arranged serially in a current path of the lighting control bus (6). The switch (12) is configured to gate a current (I) of the lighting control bus (6) in accordance with a voltage (V) of the lighting control bus (6) applied to a control terminal of the switch (12). The resistor (11) is configured to sense the current (I) gated by the switch (12) as a voltage drop there across. The current limiter (1) further comprises a reference diode (13) configured to shunt the voltage (V) applied to the control terminal of the switch (12) in accordance with the voltage drop across the resistor (11). The current limiter (1) further comprises a capacitor (14) connected in parallel to the reference diode (13). This avoids high output current ripple when the current (I) is limited by the circuit.

## Description

### Technical Field

The present disclosure generally relates to lighting technology, and in particular to a current limiter for a power supply of a lighting control bus, a power supply comprising the current limiter, and a driver for at least one LED comprising the power supply.

### Background Art

Lighting control buses according to the Digital Addressable Lighting Interface (DALI) specifications use a single pair of wires for both communication and powering. Signals are sent by briefly shorting the bus to a low voltage level, wherein power supplies of the lighting control bus are required to tolerate this, limiting the current to 250 mA by means of a current limiter circuit.

For a prompt response to a shorting of the bus, such current limiter circuits are typically arranged between the lighting control bus and the power supply for the same, and comprise an analog circuit including a reference diode for low temperature drift and a Field Effect Transistor (FET) for limitation of the flow of current on the lighting control bus if any of the gears (e.g., drivers, sensors, controls) attached to the lighting control bus communicate.

The prompt response may result in a partial return to the high voltage level or a ringing, which in turn may affect the communication on the lighting control bus. For a proper communication, it is important that a signal level change on the lighting control bus is preferably monotonic.

However, due to the FET's digital switching characteristic, a control loop of the power supply may behave hysteresis-like. Therefore a ripple of an output current of the power supply may be significant.

### Summary

In view of the above-mentioned drawbacks and limitations, the present disclosure aims to improve the current limiter of the background art. An objective is to provide a ripple-reducing current limiter

The objective is achieved by the embodiments as defined by the appended independent claims. Preferred embodiments are set forth in the dependent claims and in the following description and drawings.

A first aspect of the present disclosure relates to a current limiter for a power supply of a lighting control bus. The current limiter comprises a resistor and a switch arranged serially in a current path of the lighting control bus. The switch is configured to gate a current of the lighting control bus in accordance with a voltage of the lighting control bus applied to a control terminal of the switch. The resistor is configured to sense the current gated by the switch as a voltage drop there across. The current limiter further comprises a reference diode configured to shunt the voltage applied to the control terminal of the switch in accordance with the voltage drop across the resistor. The current limiter further comprises a capacitor connected in parallel to the reference diode.

The control terminal of the switch may be connected to a high-side rail of the lighting control bus; and the switch may be interposed in a low-side rail of the lighting control bus.

A control terminal of the reference diode may be connected to a common terminal of the resistor and the switch; and the reference diode may be interposed between another terminal of the resistor and the control terminal of the switch.

The capacitor may have a capacity between 3 nF and 20 nF, and preferably between 5 nF and 15 nF, for a monotonic signal level change on the lighting control bus in less than 10 µs.

The lighting control bus may comprise a DALI bus.

The switch may comprise a FET.

The reference diode may comprise an adjustable shunt regulator circuit.

A second aspect of the present disclosure relates to a power supply of a lighting control bus. The power supply comprises an interface DC/DC converter configured to supply the lighting control bus off an externally provided logic supply DC voltage; and a current limiter of the first aspect or any of its implementations interposed between the interface DC/DC converter and the lighting control bus.

The power supply may further comprise an interface control circuit configured to operate the interface DC/DC converter.

The interface DC/DC converter may comprise a galvanic isolation.

The interface DC/DC converter may comprise a Flyback converter or a resonant converter.

A third aspect of the present disclosure relates to a driver for at least one LED. The driver comprises a power factor correction, PFC, AC/DC converter configured to supply a DC bus off an AC mains supply; a first DC/DC converter configured to supply the at least one LED off the DC bus; a second DC/DC converter configured to provide a logic supply DC voltage off the DC bus; and a power supply of the second aspect or any of its implementations. The power supply is configured to supply a lighting control bus connectable to the driver off the logic supply DC voltage provided by the second DC/DC converter.

The driver may further comprise a communications interface entity configured to communicate via the lighting control bus; and a driver control entity configured to operate the first DC/DC converter in accordance with lighting control instructions receivable by the communications interface entity.

A fourth aspect of the present disclosure relates to a lighting control system. The lighting control system comprises a driver of the third aspect or any of its implementations for at least one LED.

The driver is connected to a lighting control bus and configured to drive the at least one LED in accordance with a lighting control instruction receivable via the lighting control bus. The lighting control system further comprises at least one bus participant connected to the lighting control bus and configured to issue the lighting control instruction for the driver via the lighting control bus.

### Advantageous Effects

The present disclosure provides a current limiter for a power supply of a lighting control bus, in particular a DALI bus, wherein a capacitor is provided parallel to the reference diode's anode and cathode terminals, thereby softening a switching behaviour of the FET. This results in highly reduced output current ripple when current is limited by the circuit (control loop active), and a robust current signal which highly reduces current peaks and ringing and unstable behavior on the DALI bus transients, thereby easing a fulfillment of the DALI specifications. Furthermore, lower losses due to reduced ripple may extend a life time of the DALI system.

The technical effects and advantages described above in relation with the current limiter equally apply to the power supply comprising the current limiter, and to the driver comprising the power supply.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a driver including a power supply including a current limiter, all in accordance with the present disclosure; and
- FIG. 2: illustrates the current limiter of FIG. 1 in more detail.

### Detailed Descriptions of Drawings

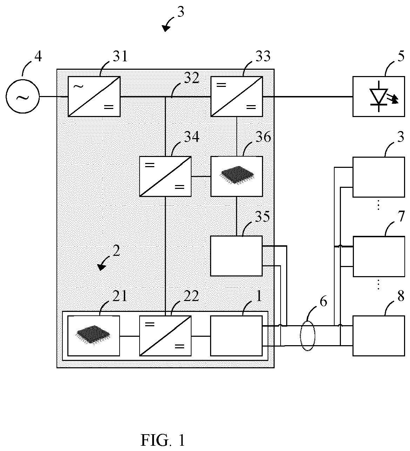

FIG. 1 illustrates a driver 3 including a power supply 2 including a current limiter 1, all in accordance with the present disclosure.

The driver 3 for at least one LED 5 comprises a PFC AC/DC converter 31 configured to supply a DC bus voltage, such as 400V, to a ― schematically illustrated ― dual rail DC bus 32 off an AC mains supply 4; a first DC/DC converter 33 configured to supply a load supply DC voltage to the at least one LED 5 off the DC bus 32; a second DC/DC converter 34 configured to provide a logic supply DC voltage, such as 12V, off the DC bus 32; and a power supply 2 of the second aspect or any of its implementations.

The power supply 2 is configured to supply a lighting control bus 6, such as a DALI bus, connectable to the driver 3 off the logic supply DC voltage provided by the second DC/DC converter 34.

The driver 3 may further comprise a communications interface entity 35, such as a DALI communications interface, configured to communicate bidirectionally via the lighting control bus 6; and a driver control entity 36, such as a microcontroller, configured to operate the first DC/DC converter 33 in accordance with lighting control instructions receivable by the communications interface entity 35. For example, the driver control entity 36 is configured to dim the at least one LED 5 in accordance with such lighting control instructions received from one or more sensors 7 or one or more controls 8, such as Serial DIMmer communications (S-DIM) controls, DSI controls or DALI controls.

Besides the driver 3 described above, similar drivers 3 may be connected to the same lighting control bus 6.

The driver 3 connected to the lighting control bus 6 may form a part of a lighting control system, whereas at least one bus participant, e.g. sensor 7 and / or controls 8, is connected to the lighting control bus 6 and configured to issue the lighting control instruction for the driver 3 via the lighting control bus 6.

The power supply 2 comprises an interface DC/DC converter 22 configured to supply the lighting control bus 6 off an externally provided logic supply DC voltage, such as the logic supply DC voltage provided by the second DC/DC converter 34 of the driver 3; and a current limiter 1 of the first aspect or any of its implementations interposed between the interface DC/DC converter 22 and the lighting control bus 6.

The power supply 2 may further comprise an interface control circuit 21, such as an integrated circuit (IC), configured to operate the interface DC/DC converter 22.

The driver control entity 36 and the interface control circuit 21 may be combined as one joint control entity, e.g. as one integrated circuit, performing both functions.

The interface DC/DC converter 22 may comprise a galvanic isolation, and particularly comprise a Flyback converter or a resonant converter.

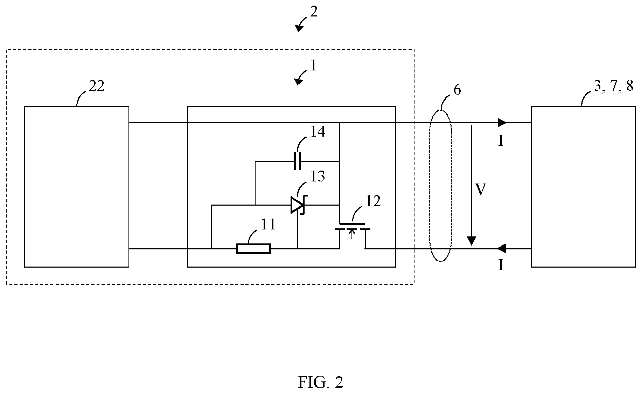

FIG. 2 illustrates the current limiter 1 of FIG. 1 in more detail.

The current limiter 1 comprises a resistor 11 and a switch 12 arranged serially in a current path of the lighting control bus 6.

The switch 12 may comprise a FET.

The control terminal of the switch 12 may be connected to a high-side rail of the lighting control bus 6; and the switch 12 may be interposed in a low-side rail of the lighting control bus 6. The switch 12 is configured to gate a current I of the lighting control bus 6 in accordance with a voltage V of the lighting control bus 6 applied to a control terminal of the switch 12. This may also refer to a fraction of said voltage V, as may be derived from the voltage V by means of a voltage drop across one or more resistors (not shown) provided at the control terminal of the switch 12.

As used herein, to "gate" may refer to controlling a passage or pass-through (of a current/voltage) with a gate, in dependence of some other parameter. For example, the gate may be a gate of a field-effect transistor (FET) semiconductor switch.

As used herein, a high-side rail may refer to a particular one of a pair of electrical connections between a power supply (such as the power supply 2) and a load such as a bus participant (e.g. a sensor 7 or a control 8 connected to the lighting control bus 6) having a higher electrical potential of the pair, and a low-side rail may refer to the other one of the pair having a lower electrical potential of the pair.

The resistor 11 is configured to sense the current I gated by the switch 12 as a voltage drop across the resistor 11.

The current limiter 1 further comprises a reference diode 13, such as a TL431 adjustable shunt regulator circuit. In simple terms, the reference diode 13 is configured to act as a temperature-compensated variable/adjustable Zener diode. A control terminal of the reference diode 13 may be connected to a common terminal of the resistor 11 and the switch 12; and the reference diode 13 may be interposed between another terminal of the resistor 11 and the control terminal of the switch 12. The current limiter 1 is configured to shunt the voltage V applied to the control terminal of the switch 12 in accordance with the voltage drop across the resistor 11.

As used herein, to "shunt" may refer to tapping (a voltage) in dependence of some other parameter. For example, shunting a voltage may be a gradual tapping / function of said parameter.

As a result, the current I is limited by the current limiter 1 if any of the gears (i.e., sensors 7, controls 8 or drivers 3) connected to the lighting control bus 6 communicate by briefly shorting the high-side and low side rails of the lighting control bus 6 to a low voltage level.

The current limiter 1 further comprises a capacitor 14 connected in parallel to the reference diode 13. The capacitor 14 may have a capacity between 3 nF and 20 nF, and preferably between 5 nF and 15 nF, for a monotonic signal level change on the lighting control bus 6 in less than 1 µs. That is to say, the capacitor 14 provided parallel to the anode and cathode terminals of the reference diode 13 soften a switching behaviour of the switch 12.

As a result, an output current ripple is highly reduced when the current I is limited by the current limiter 1, and the robust current signal highly reduces current peaks and ringing and unstable behavior on the DALI bus.

## Claims

1. A current limiter (1) for a power supply (2) of a lighting control bus (6), the current limiter (1) comprising
a resistor (11) and a switch (12) arranged serially in a current path of the lighting control bus (6), the switch (12) configured to gate a current (I) of the lighting control bus (6) in accordance with a voltage (V) of the lighting control bus (6) applied to a control terminal of the switch (12), and the resistor (11) configured to sense the current (I) gated by the switch (12) as a voltage drop there across;
a reference diode (13) configured to shunt the voltage (V) applied to the control terminal of the switch (12) in accordance with the voltage drop across the resistor (11); and
a capacitor (14) connected in parallel to the reference diode (13).

2. The current limiter (1) of claim 1,
the control terminal of the switch (12) connected to a high-side rail of the lighting control bus (6); and
the switch (12) interposed in a low-side rail of the lighting control bus (6).

3. The current limiter (1) of claim 1 or claim 2,
a control terminal of the reference diode (13) connected to a common terminal of the resistor (11) and the switch (12); and
the reference diode (13) interposed between another terminal of the resistor (11) and the control terminal of the switch (12).

4. The current limiter (1) of any one of the preceding claims,
the capacitor (14) having a capacity between 3 nF and 20 nF, and preferably between 5 nF and 15 nF, for a monotonic signal level change on the lighting control bus (6) in less than 1 µs.

5. The current limiter (1) of any one of the preceding claims,
the lighting control bus (6) comprising a DALI bus.

6. The current limiter (1) of any one of the preceding claims,
the switch (12) comprising a FET.

7. The current limiter (1) of any one of the preceding claims,
the reference diode (13) comprising an adjustable shunt regulator circuit.

8. A power supply (2) of a lighting control bus (6), the power supply (2) comprising
an interface DC/DC converter (22) configured to supply the lighting control bus (6) off an externally provided logic supply DC voltage; and
a current limiter (1) of any one of the preceding claims interposed between the interface DC/DC converter (22) and the lighting control bus (6).

9. The power supply (2) of claim 8, further comprising
an interface control circuit (21) configured to operate the interface DC/DC converter (22).

10. The power supply (2) of claim 8 or claim 9,
the interface DC/DC converter (22) comprising a galvanic isolation.

11. The power supply (2) of claim 10,
the interface DC/DC converter (22) comprising a Flyback converter or a resonant converter.

12. A driver (3) for at least one LED (5), the driver (3) comprising
a power factor correction, PFC, AC/DC converter (31) configured to supply a DC bus (32) off an AC mains supply (4);
a first DC/DC converter (33) configured to supply the at least one LED (5) off the DC bus (32);
a second DC/DC converter (34) configured to provide a logic supply DC voltage off the DC bus (32); and
a power supply (2) of any one of the claims 8 to 11 configured to supply a lighting control bus (6) connectable to the driver (3) off the logic supply DC voltage provided by the second DC/DC converter (34).

13. The driver (3) of claim 12, further comprising
a communications interface entity (35) configured to communicate via the lighting control bus (6); and
a driver control entity (36) configured to operate the first DC/DC converter (33) in accordance with instructions receivable by the communications interface entity (35).

14. A lighting control system, comprising
a driver (3) for at least one LED (5) of claim 12 or claim 13 connected to a lighting control bus (6) and configured to drive the at least one LED (5) in accordance with a lighting control instruction receivable via the lighting control bus (6); and
at least one bus participant (7, 8) connected to the lighting control bus (6) and configured to issue the lighting control instruction for the driver (3) via the lighting control bus (6).
